# EUROPÄISCHE PATENTSCHRIFT

(11) **EP 2 360 397 B1**
(45) Veröffentlichungstag und Bekanntmachung des Hinweises auf die Patenterteilung: **25.09.2013**
(21) Anmeldenummer: 11151483.2
(22) Anmeldetag: 20.01.2011
(51) Int. Cl.: F16H 61/22

(54) **Verfahren zum Blockieren mindestens einer Anwahlposition eines Wählelements sowie Schalteinrichtung für Fahrzeuge**
Method for blocking at least one selection position of a selection element and switching device for vehicles
Procédé de blocage d'au moins une position de sélection d'un élément de sélection ainsi que dispositif de commutation pour véhicules

(30) Priorität: 11.02.2010 DE 102010007507
(43) Veröffentlichungstag der Anmeldung: 24.08.2011
(73) Patentinhaber: Bayerische Motoren Werke Aktiengesellschaft, 80809 München (DE)
(72) Erfinder: Lindner, Matthias, 82166, Gräfelfing (DE); Dr.Tille, Thomas, 81249, München (DE)

(56) Entgegenhaltungen:
- DE-A1- 3 237 508
- DE-A1-102007 011 901
- DE-A1-102008 001 805
- US-B1- 6 308 813

## Beschreibung

Die vorliegende Erfindung betrifft ein Verfahren gemäß den Merkmalen des Patentanspruches 1 sowie eine Schalteinrichtung gemäß den Merkmalen des Patentanspruches 2.

Ein Verfahren und eine Schalteinrichtung gemäß dem Oberbegriff der Patentansprüche 1 und 2 sind aus der DE 32 37 508 A1 bekannt. Zum relevanten Stand der Technik zählen ferner die DE 10 2007 011 901 A1 sowie die US 6 308 813 B1, und die DE 10 2008 001 805 A1.

Im Automobilbau ist seit Jahrzehnten ein Trend zu Getrieben mit einer zunehmenden Anzahl von Vorwärtsgängen zu beobachten. Je mehr Gänge zur Verfügung stehen, umso besser gelingt es, den Antriebsmotor in energetisch günstigen Betriebspunkten zu betreiben. Bei Fahrzeugen mit Handschaltgetrieben waren in den 1970er Jahren Getriebe mit vier Gängen üblich. In den 1980er und 1990er Jahren erhöhte sich die Gangzahl moderner Fahrzeuge auf fünf Vorwärtsgänge und in den letzen 10 bis 15 Jahren ist man bereits zu Handschaltgetrieben mit sechs Vorwärtsgängen übergegangen. Sowohl aus ökologischen als auch als fahrdynamischen Gründen wird bereits über Handschaltgetriebe mit sieben oder acht Vorwärtsgängen nachgedacht.

Will man die Gangzahl eines "von Hand schaltbaren Getriebes" auf sieben, acht oder noch mehr Vorwärtsgänge erhöhen, so müssen technische Maßnahmen getroffen werden, um die Gefahr von "Fehischaltungen" zu minimieren. Würde man bei einem Fahrzeug mit acht Vorwärtsgängen, die einzelnen Gänge in einem herkömmlichen H-Schaltschema anordnen, so bräuchte man allein für die Vorwärtsgänge vier parallele Schaltgassen. Für einen Durchschnittsfahrer dürften, insbesondere in Stresssituationen, acht Vorwärtsgänge ohne "zusätzliche technische Maßnahmen" nur schwer beherrschbar sein. Um Fehlschaltungen zu vermeiden, muss also fahrzustandsabhängig das Einlegen "momentan ungeeigneter Gänge" zuverlässig verhindert werden.

Aufgabe der Erfindung ist es, ein entsprechendes Verfahren bzw. eine entsprechende Schalteinrichtung zu schaffen, das bzw. die sicherstellt, dass in jeder Fahrsituation stets nur die aktuell "geeigneten Gänge" eingelegt werden können und die übrigen Gänge gesperrt bzw. blockiert sind.

Diese Aufgabe wird durch die Merkmale der Patentansprüche 1 bzw. 2 gelöst. Vorteilhafte Ausgestaltungen und Weiterbildungen der Erfindung sind den Unteransprüchen zu entnehmen.

Sowohl das im Patentanspruch 1 beschriebene Verfahren als auch die in Patentanspruch 2 beschriebene Schalteinrichtung zielt insbesondere auf "Handschaltgetriebe" für Fahrzeuge ab, auch wenn dies nicht notwendigerweise die einzige denkbare Anwendung ist. Der Begriff "Handschaltgetriebe" ist äußerst breit auszulegen. Unter einem Fahrzeug mit einem Handschaltgetriebe wird hier ganz allgemein ein Fahrzeug verstanden, bei dem das Schalten von einem Vorwärtsgang in einen anderen Vorwärtsgang nicht bzw. nicht ausschließlich von einer Elektronik gesteuert bzw. geregelt wird, sondern bei dem der Schaltvorgang von einem Vorwärtsgang in einen anderen vom Fahrer durch Betätigen eines "Gangwahlelements", das im Folgenden auch kurz als "Wählelement" bezeichnet wird, ausgelöst wird.

Das Wählelement könnte prinzipiell, wie dies auch heute noch bei einer Vielzahl von Fahrzeugen der Fall ist, mechanisch mit dem Getriebe gekoppelt sein. In Betracht kommen aber insbesondere Fahrzeuge mit Getrieben, bei denen das Wählelement ausschließlich elektrisch mit dem Getriebe bzw. mit einem Getriebeaktuator oder mit mehreren Getriebeaktuatoren, welcher bzw. welche die eigentlichen Schaltvorgänge durchführt bzw. durchführen, kommuniziert (Shift-by-wire-Schaltung).

Bei dem Verfahren gemäß der Erfindung handelt es sich um ein Verfahren zum Blockieren mindestens einer "Anwahlposition" eines Wählelements, insbesondere eines Getriebegangwählelements, eines Fahrzeugs. Unter dem Begriff "Anwahlposition" ist eine Position zu verstehen, in die das Wählelement bewegt werden muss, um einen Schaltvorgang in einen gewünschten Zielgang durchzuführen bzw. auszulösen. Der Begriff "Blockieren" bedeutet in diesem Zusammenhang ganz allgemein, dass das Erreichen einer bestimmten "Anwahlposition" und insbesondere das Einiegen eines aktuell unzulässigen Getriebeganges verhindert wird.

Gemäß der Erfindung wird das Wählelement zunächst aus einer (beliebigen) Ausgangsstellung, bei der es sich beispielsweise um einen momentan eingelegten Gang oder um eine Grundstellung bzw. Neutralstellung des Wählelements handeln kann, in eine einer beabsichtigten Anwahlposition vorgelagerte Prüfposition bewegt.

Das Erreichen der Prüfposition kann elektronisch sensiert werden. Bei Erreichen der Prüfposition wird elektronisch überprüft, ob die der Prüfposition zugeordnete Anwahlposition, d. h. der "Zielgang" in den der Fahrer schalten möchte, momentan zulässig ist. Diese Zulässigkeitsprüfung kann mittels einer vorgegebenen Prüflogik bzw. mittels eines vorgegebenen Prüfalgorithmus' erfolgen. Ein ganz entscheidender Prüfparameter hierbei ist die Fahrzeuggeschwindigkeit. So kann z.B. vorgesehen sein, dass die Anwahlposition "5. Gang" als unzulässig betrachtet wird, wenn die Fahrzeuggeschwindigkeit kleiner als eine vorgegebene Geschwindigkeit ist, z.B. kleiner als 40km/h.

Der Kern der Erfindung besteht darin, dass eine Weiterbewegung des Wählelements in die beabsichtigte Anwahlposition mittels einer Blockiereinrichtung blockiert werden kann, die auf einer Flüssigkeit basiert, deren Viskosität elektrisch bzw. magnetisch veränderbar ist. Eine Weiterbewegung des Wählelements von der Prüfposition in die beabsichtigte Anwahlposition wird dabei mittels einer elektro- oder magnetorheologischen Blockiereinrichtung blockiert bzw. bleibt blockiert, wenn die der Prüfposition zugeordnete Anwahlposition momentan unzulässig ist.

Wenn die Auswahlposition zulässig ist, wird eine Trennkupplung betätigt. Anschließend wird von der Getriebeaktuatorik der gewünschte Gang eingelegt. Erst dann wird die Blockade des Wählelements aufgehoben und der Wählhebel kann in der gewünschten Anwahlposition bewegt werden. All dies geschieht in einer Zeitspanne von weniger als einer Sekunde.

Eine Schalteinrichtung gemäß der Erfindung weist eine elektro- oder magnetorheologische Blockiereinrichtung auf, mittels der mindestens eine Anwahl- bzw. Schaltposition der Schalteinrichtung blockierbar ist.

Denkt man an eine Getriebeschalteinrichtung für ein Fahrzeug mit Handschaltgetriebe, so können mehrere solcher Anwahlpositionen vorgesehen sein, z. B. eine Anwahlposition für einen Rückwärtsgang und sechs, sieben, acht oder mehr Anwahlpositionen für Vorwärtsgänge. Gemäß der Erfindung kann vorgesehen sein, dass mehrere oder alle möglichen Anwahlpositionen durch ein und dieselbe Blockiereinrichtung blockierbar sind. Alternativ dazu kann jedoch auch vorgesehen sein, dass mehrere Blockiereinrichtungen vorgesehen sind, wobei einzelnen Anwahlpositionen jeweils genau eine Blockiereinrichtung individuell zugeordnet ist.

Im Falle einer Schalteinrichtung zum Anwählen von Schaltzuständen eines Fahrzeuggetriebes ist ein von Hand vom Fahrer zu betätigendes Wählelement (z. B. Wählhebel) vorgesehen, das zum Anwählen eines bestimmten Schaltzustandes des Fahrzeuggetriebes, d. h. des Rückwärtsgangs oder eines bestimmten Vorwärtsgangs, in eine zugeordnete Anwahlposition zu bewegen ist, wobei ein Erreichen einer bestimmten Anwahlposition oder mehrerer bestimmter Anwahlpositionen fahrzustandsabhängig, insbesondere fahrgeschwindigkeitsabhängig und/oder fahrtrichtungsabhängig mittels der Blockiereinrichtung blockierbar ist.

Vergleichbar mit herkömmlichen Schalthebeln von Fahrzeugen mit Handschaltgetriebe ist das Wählelement innerhalb eines vorgegebenen "Bewegungsraums" bewegbar, der ganz allgemein als "Schaltkulisse" bezeichnet werden kann.

Gemäß der Erfindung gliedert sich der Bewegungsraum in einen ersten Teilbereich, der blockierbar ist und in einen zweiten Teilbereich, der unblockierbar ist. Anders ausgedrückt kann mittels der Blockiereinrichtung verhindert werden, dass das Wählelement vom zweiten Teilbereich in den ersten Teilbereich bewegt wird.

So kann vorgesehen sein, dass in einer quer zur Fahrtrichtung verlaufenden Mittelgasse eines H-Schaltschemas das Wählelement stets frei bewegbar und nicht blockierbar ist. Bei der Mittelgasse kann es sich um eine quer zur Fahrtrichtung des Fahrzeugs verlaufende Gasse handeln. Die Mittelgasse kann den zweiten Teilbereich des Bewegungsraums des Wählelements bilden. Demgegenüber bilden die eigentlichen Schaltgassen, welche quer zur Mittelgasse, d.h. in Längsrichtung des Fahrzeugs angeordnet sein können, den ersten Teilbereich des Bewegungsraums.

Wie bereits erwähnt, kann vorgesehen sein, dass der erste Teilbereich bzw. die den ersten Teilbereich bildenden Schaltgassen durch eine einzige oder jeweils durch eine separat zugeordnete Blockiereinrichtung blockierbar sind.

Bei manchen modernen Fahrzeugen wird der aktuelle Schaltzustand, d.h. der aktuell eingelegte Getriebegang häufig im sogenannten "Instrumentenkombi" angezeigt. Gemäß der Erfindung kann nun vorgesehen sein, dass alternativ oder zusätzlich zur Anzeige im Instrumentenkombi z.B. an einer Oberseite des Wählelements, d.h. in einem Bereich des Wählelements der vom Fahrer ergonomisch gut einsehbar ist, das Schaltschema, bei dem es sich um ein H-Schema oder um ein modifiziertes H-Schema handeln kann, mit seinen einzelnen Anwahl- bzw. Gangpositionen schematisch dargestellt ist und dass ein momentan eingelegter Schaltzustand bzw. Gang optisch an dem Schema angezeigt wird.

Die einzelnen Schalt- bzw. Gangpositionen können durch Zahlen oder Buchstaben markiert sein. Ist ein bestimmter Gang eingelegt, so kann vorgesehen sein, dass die entsprechende Zahl bzw. der entsprechende Buchstabe beleuchtet dargestellt wird.

Nach einer Weiterbildung der Erfindung ist die Blockiereinrichtung elektrisch ansteuerbar. Dementsprechend kann sie einen bestromten oder einen unbestromten Zustand einnehmen. Es kann vorgesehen sein, dass die Blockiereinrichtung im unbestromten Zustand blockiert und nur im bestromten Zustand ein freies Schalten des Wählelements gestattet.

Hierzu kann eine Blockiereinrichtung vorgesehen sein, die einen auf eine elektro- oder magnetorheologische Flüssigkeit einwirkenden Permanentmagneten aufweist. Im unbestromten Zustand der Blockiereinrichtung wird die elektro- oder magnetorheologische Flüssigkeit vom Magnetfeld des Permanentmagneten durchsetzt und dadurch in einen hochviskosen Zustand versetzt. "Hochviskos" bedeutet in diesem Zusammenhang "in einen relativ zähen Zustand", der ein Schalten bzw. ein Bewegen des Wählelements in eine bestimmte Anwahlposition verhindert.

Eine Blockiereinrichtung gemäß der Erfindung weist ferner mindestens einen Elektromagneten auf, der im bestromten Zustand der Blockiereinrichtung ein Magnetfeld erzeugt, das dem Magnetfeld des Permanentmagneten entgegenwirkt. Dadurch kann die elektro- bzw. magnetorheologische Flüssigkeit in einen anderen Aggregatszustand "umgeschaltet" werden. Anders ausgedrückt wird die elektro- bzw. magnetorheologische Flüssigkeit im bestromten Zustand der Blockiereinrichtung durch die einander teilweise oder ganz aufhebenden Magnetfelder in einen "niedrigviskosen Zustand" versetzt, in dem ein bestimmter Schaltvorgang des Wählelements nicht durch die Blockiereinrichtung blockiert ist.

Bei dem Wählelement kann es sich ein monostabiles oder ein multistabiles Wählelement handeln. Unter einem monostabilen Wählelement wird ein Wählelement verstanden, das sich grundsätzlich in einer definierten Ausgangsstellung befindet und das nach einer Betätigung durch den Fahrer auch stets selbsttätig in seine Grundstellung zurückkehrt. Unter einem multistabilen Wählelement wird ein Wählelement verstanden, das mindestens zwei stabile Stellungen aufweist. Hierunter zu verstehen sind insbesondere solche Wählelemente, die, wenn ein bestimmter Getriebegang eingelegt ist, in der zugeordneten Anwahlposition verharren, auch wenn der Fahrer das Wählelement loslässt. Ein multistabiles Wählelement kann aber auch so beschaffen sein, wie man es von Fahrzeugen mit Automatikgetriebe und einer Mehrgassenschaltung kennt, bei der parallel zu einer Automatikschaltgasse eine manuelle Schaltgasse vorgesehen ist.

Im Folgenden wird die Erfindung im Zusammenhang mit der Zeichnung näher erläutert. Es zeigen:
- Figur 1, 2: Ausführungsbeispiele einer "rheologischen Blockiereinrichtung" in schematischer Darstellung,
- Figur 3: eine schematische Darstellung der Gesamtanordnung "Wählelement, Positionssensorik, Schaltaktuator, Getriebe";
- Figur 4: ein Wählelement mit hinterleuchteten Schaltpositionen; und
- Figur 5: ein Ausführungsbeispiel einer Blockiereinrichtung in schematischer Darstellung.

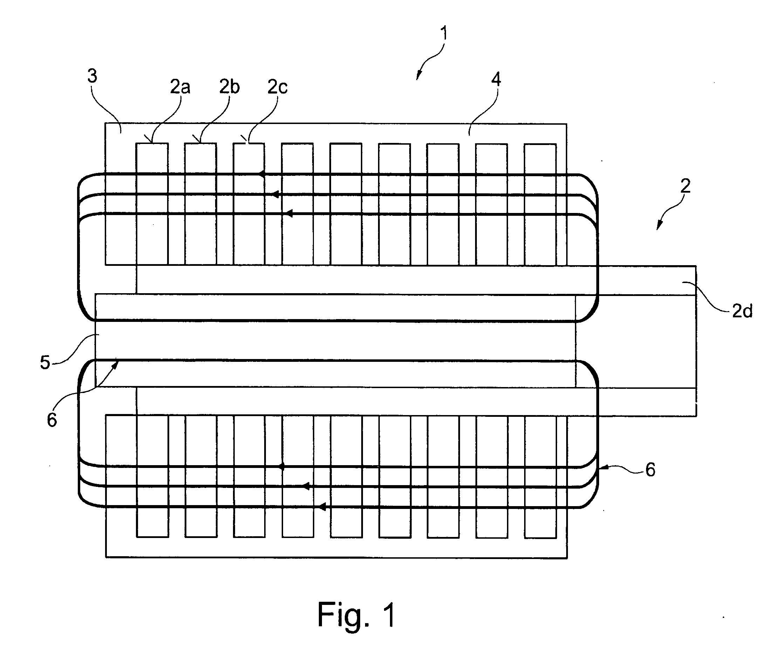

Figur 1 zeigt eine Blockiereinrichtung 1 für ein Gangwählelement eines Schaltgetriebes eines Fahrzeugs. Mittels der Blockiereinrichtung 1 kann ein Rotor 2, der an einer Schaltstange eines elektrifizierten Handschaltgetriebes oder eines Automatikgetriebes befestigt sein kann, blockiert werden. Der Rotor 2 ist in einem fahrzeugfest angeordneten Gehäuse 3 drehbar angeordnet. Bei dem hier gezeigten Ausführungsbeispiel weist der Rotor 2 eine Vielzahl voneinander beabstandeter ringförmiger Rotorscheiben 2a, 2b, 2c etc. auf, die mit einer Rotorwelle 2d verbunden sind. Durch die Scheiben 2a, 2c kann eine relativ große Rotoroberfläche dargestellt werden.

Das Gehäuse 3 ist mit einer elektro- oder magnetorheologischen Flüssigkeit gefüllt, welche sich im Bereich zwischen der Innenseite des Gehäuses 3 und den Rotorscheiben 2a, 2c und der Rotorwelle 2d befindet. Ferner ist ein Elektromagnet 5 vorgesehen, der beim hier gezeigten Ausführungsbeispiel im Inneren der als Hohlwelle ausgebildeten Rotorwelle 2d des Rotors 2 angeordnet ist. Mittels des Elektromagneten 5 kann ein die elektro- bzw. magnetorheologische Flüssigkeit durchsetzendes Magnetfeld 6 erzeugt werden.

Die Blockiereinrichtung 1 kann ferner mit einem Permanentmagneten versehen sein, dessen Magnetfeld permanent die elektro- bzw. magnetorheologische Flüssigkeit 4 durchsetzt. Ist der Elektromagnet 5 unbestromt, so befindet sich die elektro- bzw. magnetorheologische Flüssigkeit in einem hochviskosen, d.h. hochzähen Zustand, was zur Folge hat, dass der Rotor 2 faktisch blockiert, d.h. nicht bewegbar ist. Durch Bestromen des Elektromagneten 5 kann ein dem Magnetfeld des Permanentmagneten (nicht dargestellt) entgegenwirkendes Magnetfeld erzeugt werden, was dann im Ergebnis bewirkt, dass die elektro- bzw. magnetorheologische Flüssigkeit in einen "niederviskosen Zustand" übergeht. Im "niederviskosen Zustand" kann der Rotor 2 relativ zu dem Gehäuse 3 bewegt bzw. gedreht werden.

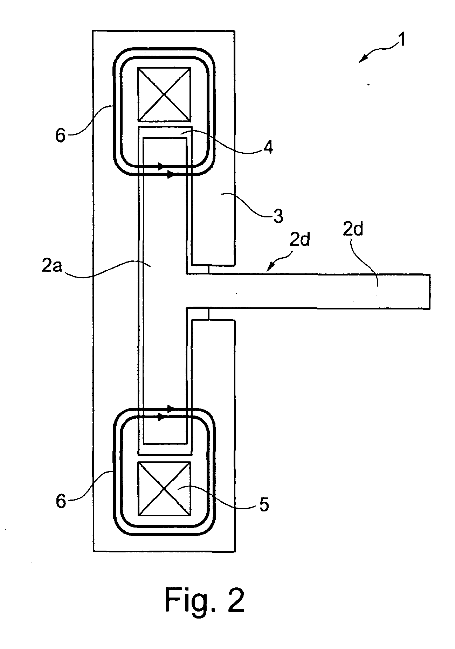

Figur 2 zeigt ein anderes Ausführungsbeispiel einer Blockiereinrichtung 1, bei der ein Rotor 2 mit lediglich einer Rotorscheibe 2a vorgesehen ist. Der Elektromagnet 5 ist hier als Ringspule ausgebildet, welche sich radial außerhalb des Rotors um dessen Rotorscheibe 2a herum erstreckt. Zwischen der Rotorscheibe 2a und einem Gehäuse 3 befindet sich eine elektro- bzw. magnetorheologische Flüssigkeit 4, die im umbestromten Zustand des Elektromagneten 5, sich in einem hochviskosen Zustand befindet. Durch Bestromen des Elektromagneten 5 kann die Flüssigkeit 4 in einen niederviskosen Zustand "umgeschaltet" werden.

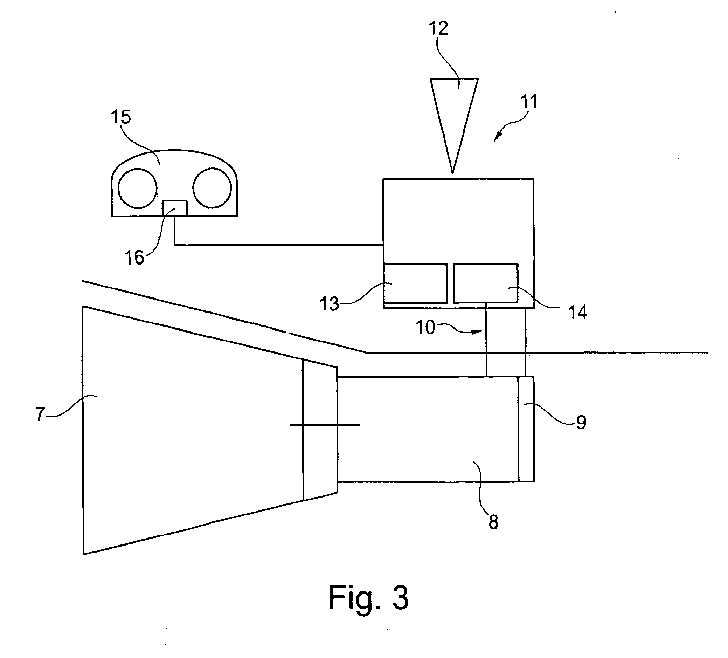

Figur 3 zeigt in schematischer Darstellung ein Handschaltgetriebe 7, das mittels einer elektrisch ansteuerbaren Aktuatorik 8 schaltbar ist. Der Aktuatorik 8 zugeordnet ist eine Positionssensorik 9, mittels der überwacht werden kann, welcher Getriebegang gerade eingelegt ist. Die Aktuatorik 8 und die Positionssensorik sind über eine elektrische Schnittstelle 10 mit einer Wählelementeinheit 11 verbunden. Die Wählelementeinheit 11 weist ein von Hand zu betätigendes Wählelement 12, das auch als Gangwahlhebel bezeichnet werden kann, einen Schaltwegdämpfer 13 und einen Leistungstreiber 14 auf, welcher Bewegungen des Wählelements 12 in elektrische Signale umsetzt. Die Wählelementeinheit 11 ist ferner elektrisch mit einem sogenannten Instrumentenkombi 15 verbunden, das eine Anzeige 16 aufweist, in der der aktuell eingelegte Getriebegang angezeigt werden kann.

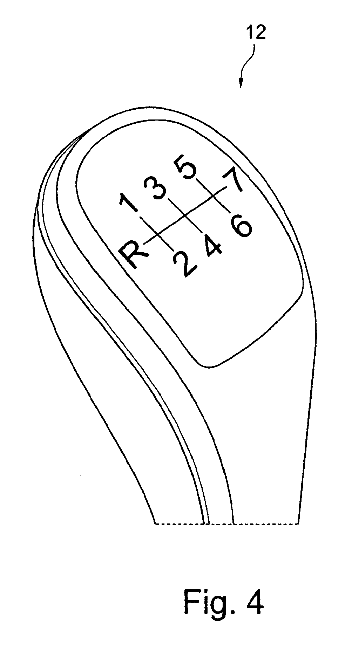

Figur 4 zeigt einen Wählhebel für ein Siebenganghandschaltgetriebe. An der Oberseite des Wählhebels 12 ist ein Schaltschema mit sechs, entsprechend einem herkömmlichen H-Schaltschema angeordneten Vorwärtsgängen und einem links der Mittelschaltgasse angeordneten Rückwärtsgang sowie einem rechts der Mittelschaltgasse angeordneten siebten Gang vorgesehen. Die durch Ziffern bzw. durch den Buchstaben R angedeuteten Schaltpositionen können hinterleuchtet werden, wobei jeweils der aktuell eingelegte Getriebegang beleuchtet ist.

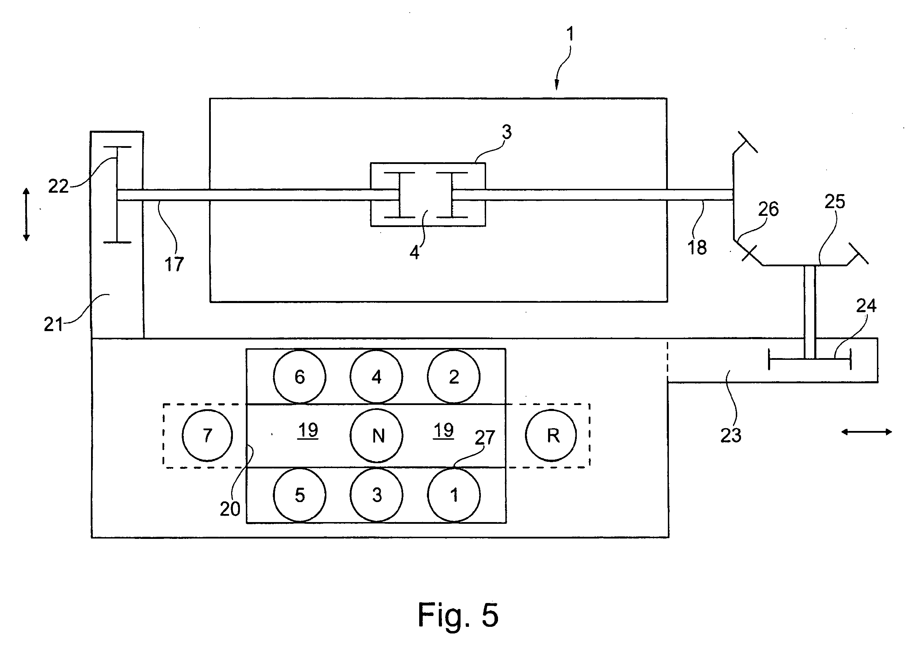

Figur 5 zeigt in schematischer Darstellung eine Blockiereinrichtung 1, bei der in einem Gehäuse 3, das mit einer elektro- bzw. magnetorheologische Flüssigkeit 4 gefüllt ist, ein erster Rotor 17 und ein zweiter Rotor 18 drehbar angeordnet sind.

Ferner dargestellt sind Schaltpositionen eines elektrifizierten Handschaltgetriebes mit sieben Vorwärtsgängen 1, 2, 3, 4, 5, 6, 7, einer Neutralstellung N und einem Rückwärtsgang R.

Ein hier nicht näher dargestelltes Wählelement ist in einer Mittelquerschaltgasse, die durch die beiden Bezugszeichen 19 angedeutet ist, frei bewegbar. Wird das Wählelement beispielsweise ausgehend von der Neutralstellung N in Richtung 7. Gangs bewegt, so wird zunächst eine dem 7. Gang zugeordnete Prüfposition 20 erreicht, in der eine Elektronik überprüft, ob ein Schalten in den 7. Gang unter den momentan vorliegenden Fahrbedingungen (Fahrzeuggeschwindigkeit, Motordrehzahl etc.) als zulässig angesehen wird.

Wird ein Schalten in den siebten Gang als nicht zulässig angesehen und drückt der Fahrer den Wählhebel weiter in Richtung der Schaltposition 7, so wird über eine Zahnstange 21 und ein damit kämmendes Zahnrad 22 ein Drehmoment auf den ersten Rotor 17 ausgeübt. Wie oben bereits erwähnt, entspricht der unbestromte Zustand der Blockiereinrichtung 1 dem Blockierzustand, in dem sich die Flüssigkeit 4 in einem hochviskosen Zustand befindet und eine Drehung des Rotors 17 blockiert. Dementsprechend kann der das Wählelement nicht in die Schaltposition 7 bewegt werden.

Ergibt die Überprüfung in der Prüfstellung 20 hingegen, dass ein Schalten in den 7. Gang als zulässig angesehen wird, so wird die Blockiereinrichtung 1 bzw. ein Elektromagnet (nicht dargestellt) der Blockiereinrichtung 1 bestromt und dadurch die Flüssigkeit 4 in einen niederviskosen Zustand versetzt, was ein Verschieben der Zahnstange 21 und eine entsprechende Drehung des Zahnrads 22 bzw. des damit verbundenen ersten Rotors 17 ermöglicht.

Eine Freigabe bzw. Sperrung der Anwahlpositionen 1, 2, 3, 4, 5, 6 erfolgt in analoger Weise über eine Zahnstange 23 und einen Zahnradmechanismus 24, 25, 26, welcher mit dem Rotor 18 gekoppelt ist.

Die Funktionsweise wird exemplarisch anhand des Schaltvorgangs vom zweiten in den ersten Gang erläutert. Bei dem hier nicht näher dargesellten Wählelement kann es sich um ein monostabiles Wählelement handeln, das sich im unbetätigten Zustand stets in der Positionen N befindet. Ist beispielsweise der zweite Gang eingelegt, so befindet sich das Wählelement in der Position N. Soll in den ersten Gang zurückgeschaltet werden, so muss zunächst eine im ersten Gang zugeordnete Prüfposition 27 mit dem Wählelement angefahren werden. Ergibt die Überprüfung, dass ein Rückschalten in den ersten Gang unzulässig ist (z.B. weil die momentane Fahrzeuggeschwindigkeit zu hoch ist), so bleibt die Blockiereinrichtung 1 unbestromt, wodurch ein dem Schaltvorgang in den ersten Gang entsprechendes Verschieben der Zahnstange 23 verhindert wird.

Ergibt die Überprüfung hingegen dass eine Rückschaltung in den ersten Gang zulässig ist, so wird die Blockiereinrichtung 1 bestromt, was zur Folge hat, dass die Flüssigkeit 4 in einen niederviskosen Zustand versetzt wird. Dementsprechend kann der Fahrer den Wählhebel über die Prüfposition 27 hinaus in die Schaltposition 1 bewegen, was einhergeht mit einer Verschiebung der Zahnstange 23 und einer Übersetzung der Verschiebebewegung der Zahnstange 23 in eine Drehung des Rotors 18.

## Patentansprüche

1. Verfahren zum Blockieren mindestens einer Anwahlposition eines Wählelements (12), insbesondere eines Getriebegangwählelements eines Fahrzeugs, wobei
• das Wählelement (12) aus einer Ausgangsstellung zunächst in eine einer beabsichtigten Anwahlposition vorgelagerte Prüfposition (20, 27) bewegt wird,
• in der Prüfposition (20, 27) geprüft wird, ob die der Prüfposition (20, 27) zugeordnete Anwahlposition momentan zulässig ist,
**dadurch gekennzeichnet, dass**
• eine Weiterbewegung des Wählelements (12) in die beabsichtigte Anwahlposition mittels einer elektro- oder magnetorheologischen • Blockiereinrichtung (1) blockiert wird, wenn die der Prüfposition (20, 27) zugeordnete Anwahlposition momentan unzulässig ist und
• in der Anwahlposition ein Schaltvorgang zum Einlegen eines der Anwahlposition zugeordneten Zielgangs durchgeführt oder ausgelöst wird.

2. Schalteinrichtung (11) für Fahrzeuge, wobei ein Wählelement (12) innerhalb eines vorgegebenen Bewegungsraums bewegbar ist, wobei ein erster Teilbereich des Bewegungsraums durch eine Blockiereinrichtung (1) blockierbar und ein zweiter Teilbereich (19) des Bewegungsraums unblockierbar ist, **dadurch gekennzeichnet, dass** die Blockiereinrichtung eine elektro- oder magnetorheologische Blockiereinrichtung ist, mittels der mindestens eine Anwahlposition der Schalteinrichtung (11) blockierbar ist.

3. Verfahren bzw. Schalteinrichtung nach einem der vorangehenden Ansprüche, **dadurch gekennzeichnet, dass** mehrere Anwahlpositionen vorgesehen sind, die durch ein und dieselbe Blockiereinrichtung (1) blockierbar sind.

4. Verfahren bzw. Schalteinrichtung nach einem der vorangehenden Ansprüche, **dadurch gekennzeichnet, dass** mehrere Anwahlpositionen und mehrere Blockiereinrichtungen vorgesehen sind, wobei einzelnen Anwahlpositionen jeweils genau eine Blockiereinrichtung zugeordnet ist.

5. Schalteinrichtung nach einem der Ansprüche 2 bis 4, **dadurch gekennzeichnet, dass** die Schalteinrichtung (11) zum Anwählen von Schaltzuständen eines Fahrzeuggetriebes vorgesehen ist und ein von Hand zu betätigendes Wählelement (12) vorgesehen ist, das zum Anwählen eines bestimmten Schaltzustandes des Fahrzeuggetriebes (7) in eine zugeordnete Anwahlposition zu bewegen ist, wobei mittels der Blockiereinrichtung (1) ein Erreichen der Anwahlposition blockierbar ist.

6. Schalteinrichtung nach einem der Ansprüche 2 bis 5, **dadurch gekennzeichnet, dass** der zweite Teilbereich (19) mindestens eine genau einer Anwahlposition zugeordnete Prüfposition (20, 27) aufweist, wobei, wenn sich das Wählelement (12) in der Prüfposition (20, 27) befindet, überprüft wird, ob eine Bewegung des Wählelements (12) in die zugeordnete Anwahlposition momentan zulässig ist.

7. Schalteinrichtung nach einem der Ansprüche 2 bis 6, **dadurch gekennzeichnet, dass** der Bewegungsraum mehrere in einem H-Schema angeordnete Schaltgassen mit einer quer zu den Schaltgassen verlaufenden Mittelgasse (19) aufweist, wobei der erste Teilbereich zumindest Endabschnitte der Schaltgassen und der zweite Teilbereich die Mittelgasse (19) umfasst.

8. Schalteinrichtung nach Anspruch 7, **dadurch gekennzeichnet, dass** an einer Oberseite des Wählelements (12) das H-Schema mit einzelnen Anwahlpositionen schematisch dargestellt ist und dass ein momentan eingelegter Schaltzustand optisch an dem an der Oberseite befindlichen H-Schema angezeigt wird.

9. Verfahren bzw. Schalteinrichtung nach einem der vorangehenden Ansprüche, **dadurch gekennzeichnet, dass** die Blockiereinrichtung einen auf eine elektro- oder magnetorheologische Flüssigkeit (4) einwirkenden Permanentmagneten aufweist, wobei die Flüssigkeit (4) im unbestromten Zustand der Blockiereinrichtung (1) durch das Magnetfeld des Permanentmagneten in einen hochviskosen Blockierzustand versetzt wird.

10. Verfahren bzw. Schalteinrichtung nach Anspruch 9, **dadurch gekennzeichnet, dass** die Blockiereinrichtung (1) einen Elektromagneten (5) aufweist, der im bestromten Zustand der Blockiereinrichtung (1) ein Magnetfeld (6) erzeugt, das dem Magnetfeld des Permanentmagneten entgegenwirkt, wobei die Flüssigkeit (4) im bestromten Zustand der Blockiereinrichtung (1) durch das Magnetfeld des Permanentmagneten in einen niedrigviskosen Freigabezustand versetzt wird.

11. Schalteinrichtung nach Anspruch 5, **dadurch gekennzeichnet, dass** es sich bei dem Wählelement (12) um ein monostabiles Wählelement handelt, das im unbetätigten Zustand selbsttätig in eine definierte Grundstellung (N) zurückkehrt.

12. Schalteinrichtung nach Anspruch 5, **dadurch gekennzeichnet, dass** die es sich bei dem Wählelement (12) um ein multistabiles Wählelement handelt, das stets in der einem momentan eingelegten Getriebegang entsprechenden Anwahlposition verharrt.

13. Schalteinrichtung nach Anspruch 5, **dadurch gekennzeichnet, dass** es sich um eine Shift-by-wire-Schalteinrichtung handelt, wobei durch Betätigen des Wählelements (12) ein elektrisches Signal erzeugt wird, welches zur Ansteuerung mindestens eines Getriebeaktuators (8) dient.

## Claims

1. A method of blocking at least one selection position of a selector element (12), especially a gear selector element in a vehicle, wherein
• the selector element (12) first moves from a starting position into a check position (20, 27) in front of an intended selection position, and
• in the check position (20, 27) a check is made whether the selection position associated with the check position (20, 27) is permitted at that moment,
**characterised in that**
• further movement of the selector element (12) into the intended selection position is blocked by an electro- or magneto-rheological blocking device (1) if the selection position associated with the check position (20, 27) is not permitted at that moment, and
• a switching operation for engaging a target associated with the selection position is performed or triggered in the selection position.

2. A switching device (11) for vehicles, wherein a selector element (12) is movable within a set movement space, wherein a first part of the movement space is blockable by a blocking device (1) and a second part (19) of the movement space is unblockable, **characterised in that** the blocking device is an electro- or magneto-rheological blocking device by means of which at least one selection position of the switching device (11) is blockable.

3. A method or switching device according to any of the preceding claims, **characterised in that** a number of selection positions are provided and are blockable by one and the same blocking device (1).

4. A method or switching device according to any of the preceding claims, **characterised in that** a number of selection positions and a number of blocking devices are provided, wherein individual selection positions are each associated with exactly one blocking device.

5. A switching device according to any of claims 2 to 4, **characterised in that** the switching device (11) is provided for selecting switching states of a vehicle gear unit and a manually operated selector element (12) is provided which, in order to select a given switching state of the gear unit (7), is movable into an associated selection position, wherein reaching the selection position is blockable by the blocking device (1).

6. A switching device according to any of claims 2 to 5, **characterised in that** the second part (19) of the space comprises at least one check position (20, 27) associated with exactly one selection position, wherein when the selector element (12) is in the check position (20, 27) a check is made whether movement of the selector element (12) into the associated selection position is permitted at that moment.

7. A switching device according to any of claims 2 to 6, **characterised in that** the motion space comprises a number of lanes arranged in an H and with a centre lane (19) at right angles to the other lanes, wherein the first part-region comprises at least end portions of the lanes and the second part-region comprises the centre lane (19).

8. A switching device according to claim 7, **characterised in that** the H configuration with individual selection positions is diagrammatically shown on a top surface of the selector element (1 2) and a switching state engaged at a particular moment is optically indicated on the H configuration on the top surface.

9. A method or switching device according to any of the preceding claims, **characterised in that** the blocking device comprises a permanent magnet acting on an electro- or magneto-rheological liquid (4), wherein when the blocking device (1) is not energised, the liquid (4) is converted into a highly viscous blocking state by the field of the permanent magnet.

10. A method or switching device according to claim 9, **characterised in that** the blocking device (1) comprises an electromagnet (5) which, when the blocking device (1) is energised, generates a magnetic field (6) which counteracts the field of the permanent magnet, wherein when the blocking device (1) is energised the liquid (4) is converted into a lowviscosity release state by the field of the permanent magnet.

11. A switching device according to claim 5, **characterised in that** the selector element (12) is a monostable selector element which, when not energised, automatically returns to a defined normal position (N).

12. A switching device according to claim 5, **characterised in that** the selector element (12) is a multistable selector element which always remains in the selection position corresponding to a gear engaged at a given moment.

13. A switching device according to claim 5, **characterised in that** it is a shift-by-wire switching device, wherein an electric signal for actuating at least one gear actuator (8) is generated by actuating the selector element (12).

## Revendications

1. Procédé de blocage d'au moins une position de sélection d'un élément sélecteur (12) notamment d'un élément sélecteur de rapport de vitesses d'un véhicule selon lequel
- l'élément sélecteur (12) est déplacé à partir de sa position initiale tout d'abord dans une première position de contrôle (20, 27) en amont de la position de sélection voulue,
- dans la position de contrôle (20, 27) on vérifie si la position de sélection associée à la position de contrôle (20, 27) est momentanément possible,
**caractérisé en ce que**
- on bloque la poursuite du mouvement de l'élément sélecteur (12) vers la position de sélection voulue à l'aide d'une installation de blocage (1) électro-rhéologique ou magnéto-rhéologique si la position de sélection associée à la position de contrôle (20, 27) n'est pas instantanément possible, et
- dans la position de sélection on effectue ou on déclenche une phase de commutation pour passer le rapport de vitesses de consigne associé à la position sélectionnée.

2. Installation de commutation (11) d'un véhicule dans laquelle :
- un élément de sélection (12) est mobile dans un espace de mouvement prédéfini,
- une première région partielle de l'espace de mouvement peut être bloquée par une installation de blocage (1) et une seconde région partielle (19) de l'espace de mouvements ne peut pas être bloquée,
**caractérisée en ce que**
l'installation de blocage est une installation de blocage électro ou magnéto-rhéologique qui permet de bloquer au moins une position de sélection de l'installation de commutation (11).

3. Procédé ou installation de commutation selon l'une des revendications précédentes,
**caractérisé par**
plusieurs positions de sélection qui peuvent être bloquées par une seule et même installation de blocage (1).

4. Procédé ou installation de commutation selon l'une des revendications précédentes,
**caractérisé par**
plusieurs positions de sélection et plusieurs installations de blocage, une installation de blocage étant associée précisément à une position de sélection.

5. Procédé ou installation de commutation selon l'une des revendications 2 à 4,
**caractérisé en ce que**
l'installation de commutation (11) sélectionne des états de commutation d'une boite de vitesses de véhicule et un élément de sélection (12) à commande manuelle sélectionne un certain état de commutation de la boite de vitesses (7) du véhicule en étant déplacé dans la position de sélection associée, l'installation de blocage (1) pouvant bloquer le passage de la position de sélection.

6. Procédé ou installation de commutation selon l'une des revendications 2 à 5,
**caractérisé en ce que**
la seconde région partielle (19) a au moins une position de contrôle (20, 27) associée précisément à une position de sélection,
et si l'élément de sélection (12) se trouve dans la position de contrôle (20, 27) on vérifie si un mouvement de l'élément de sélection (12) dans la position de sélection associée est autorisé à cet instant.

7. Procédé ou installation de commutation selon l'une des revendications 2 à 6,
**caractérisé en ce que**
l'espace de mouvement comporte plusieurs couloirs de commutation répartis suivant un schéma en forme de H avec un couloir central (19) transversal aux couloirs de commutation,
la première région partielle comprenant au moins les segments d'extrémité des couloirs de commutation et la seconde région partielle étant le couloir central (19).

8. Procédé ou installation de commutation selon la revendication 7,
**caractérisé en ce que**
le dessus de l'élément de sélection (12) porte le schéma en forme de H représentant schématiquement les différentes positions de sélection et l'état de commutation utilisé instantanément est affiché optiquement dans le schéma en forme de H se trouvant sur le dessus.

9. Procédé ou installation de commutation selon l'une des revendications précédentes,
caractérisé ce que
l'installation de blocage a un aimant permanent agissant sur le liquide électro ou magnéto-rhéologique (4), qui, à l'état non traversé par le courant de l'installation de blocage (1), est mis par le champ magnétique de l'aimant permanent dans un état de blocage très visqueux.

10. Procédé ou installation de commutation selon la revendication 9,
**caractérisé en ce que**
l'installation de blocage (1) comporte un électro-aimant (5) qui, à l'état alimenté de l'installation de blocage (1), génère un champ magnétique (6) qui s'oppose au champ magnétique de l'aimant permanent et fait passer le liquide (4) dans un état de libération à faible viscosité lorsque l'installation de blocage (1) est alimentée, par le champs magnétique de l'aimant permanent.

11. Installation de commutation selon la revendication 5,
**caractérisé en ce que**
l'élément de sélection (12) est un élément de sélection monostable qui, à l'état non actionné, revient automatiquement dans une position de base (N) définie.

12. Installation de commutation selon la revendication 5,
**caractérisé en ce que**
l'élément de sélection (12) est un élément de sélection multi-stable qui reste toujours dans la position de sélection correspondant au rapport de vitesses passé instantanément.

13. Installation de commutation selon la revendication 5,
**caractérisé en ce qu'**
elle est constituée par une installation de commutation à commande par câble et l'actionnement de l'élément sélecteur (12) génère un signal électrique servant à commander au moins un actionneur de boite de vitesses (8).
